# FASCICULE DE BREVET EUROPEEN

(11) **EP 3 711 455 B1**
(45) Date de publication et mention de la délivrance du brevet: **17.04.2024**
(21) Numéro de dépôt: 18807111.2
(22) Date de dépôt: 05.11.2018
(51) Int. Cl.: H05B 6/12, A47J 27/21

(54) **DISPOSITIF DE LIMITATION OU DE RÉGULATION EN TEMPERATURE POUR UN USTENSILE DE CUISINE**
VORRICHTUNG ZUR BEGRENZUNG ODER REGELUNG DER TEMPERATUR BEI EINEM KOCHUTENSIL
DEVICE FOR LIMITING OR REGULATING THE TEMPERATURE IN A COOKING UTENSIL

(30) Priorité: 13.11.2017 FR 1760658
(43) Date de publication de la demande: 23.09.2020
(73) Titulaire: SEB S.A., 69130 Ecully (FR)
(72) Inventeur: SCHMERBER, Louis, 38150 Roussillon (FR); COUTELLIER, Damien, 69310 Pierre Benite (FR)
(74) Mandataire: SEB Développement
(86) Numéro de dépôt international: PCT/FR2018/052721
(87) Numéro de publication internationale: WO 2019/092345

(56) Documents cités:
- WO-A1-2013/098016
- WO-A1-2014/056785
- WO-A1-2015/062947
- GB-A- 2 135 143
- US-A1- 2015 033 949

## Description

La présente invention se rapporte au domaine technique général des ustensiles de cuisine chauffés par induction électromagnétique.

Plus particulièrement, la présente invention se rapporte à un dispositif de limitation ou de régulation en température pour un ustensile de cuisine destiné à être chauffé par un générateur à induction électromagnétique, à un ustensile de cuisine, en particulier une bouilloire, une théière, une poêle, une casserole ou un bol d'un appareil électroménager comprenant un fond dans lequel est inséré un tel dispositif de limitation ou régulation, ainsi qu'à un kit de tels dispositifs de limitation ou de régulation.

Il est particulièrement avantageux d'intégrer un dispositif de limitation ou de régulation en température dans un ustensile de cuisine, en particulier une bouilloire.

Il est connu de disposer d'une bouilloire comprenant une première partie fixe autrement appelée base, destinée à être raccordée au réseau d'alimentation électrique, et une deuxième partie mobile qui comprend un récipient pour recevoir l'eau à bouillir ainsi qu'un élément chauffant.

L'élément chauffant est du type résistif à effet Joule et nécessite une puissance électrique de 1kW à 2kW pour permettre d'amener à ébullition une quantité d'eau relativement importante généralement de l'ordre de 1L à 2L.

En outre, cette deuxième partie comporte certaines fonctions de sécurité, notamment des fonctions coupant l'alimentation en énergie de l'élément chauffant lorsque la température atteinte est supérieure à une valeur seuil ou bien lorsque le récipient ne contient plus d'eau.

Une des problématiques de la base est qu'elle doit disposer d'un connecteur électrique spécifique permettant d'alimenter en énergie l'élément chauffant de la deuxième partie lorsque celle-ci est positionnée dessus.

Lorsque la bouilloire est retirée, le connecteur ne doit pas présenter de danger pour l'utilisateur et doit donc répondre à des normes de sécurité exigeantes afin de prévenir tout risque d'électrisation.

Les bouilloires sont des produits relativement simples et peu coûteux où la connectique entre la base et la bouilloire compte pour une bonne partie du prix de revient du produit de par sa complexité et sa nécessité de respecter des normes de sécurité.

Avec ce type de bouilloire, une régulation en température est possible de par le contrôle actif de l'alimentation en énergie de l'élément de chauffe en fonction d'une température mesurée.

Ainsi, l'un des objectifs de l'invention consiste à supprimer totalement la base et la connectique d'une bouilloire.

À cet effet, il est connu de disposer d'une bouilloire dépourvue de base et dont la source d'alimentation en énergie est un générateur à inducteur, en particulier celui d'une table à induction.

Une telle bouilloire doit toujours pouvoir disposer de la fonction de sécurité en température qui permet d'arrêter de chauffer l'eau lorsque la température atteint une valeur seuil.

Le concept de bouilloire compatible avec une table à induction est connu et de nombreux produits sont disponibles sur le marché permettant de poser sur sa table à induction une bouilloire ou de manière analogue une théière.

Cependant, la plupart de ces bouilloires ne disposent pas d'un dispositif de limitation ou de régulation en température permettant d'arrêter la chauffe de la table à induction lorsqu'une valeur seuil de température est atteinte.

Il est connu du document US2015033949A1 de disposer d'un dispositif de limitation ou de régulation en température pour un ustensile de cuisine, destiné à être chauffé par un générateur à induction électromagnétique.

En outre, le corps de l'ustensile de cuisine comprend un bobinage utilisé comme antenne pour communiquer avec la plaque à induction en modifiant l'impédance de cette bobine.

Cependant, l'impédance dans la bobine ne dépend pas de la température de l'ustensile de cuisine mais simplement de l'état électrique d'un interrupteur utilisé pour modifier l'impédance électrique dans la bobine.

Il existe également des concepts qui allient un générateur à induction spécifique avec une bouilloire ou une théière spécifiques.

Ces concepts intègrent un capteur de température, généralement disposé dans le générateur à induction, et permettant de réaliser une fonction de limitation ou de régulation de température par le biais d'une communication entre le générateur à induction et la bouilloire ou théière.

La bouilloire ou théière est compatible avec l'induction, cependant lorsqu'une telle bouilloire est positionnée sur une table à induction standard, alors il n'est plus possible de limiter ou réguler la température puisque cette fonction est initialement intégrée dans le générateur à induction électromagnétique spécifique dimensionné pour cette bouilloire.

Ainsi, un autre objectif de l'invention consiste à permettre de réaliser une fonction de limitation ou de régulation en température à une bouilloire compatible avec l'induction sur une plaque à induction standard.

On entend par standard un générateur à induction électromagnétique qui ne dispose pas de moyens spécifiques de commande pour réaliser la fonction de limitation ou de régulation en température. Un tel générateur à induction électromagnétique fonctionne donc en boucle ouverte vis-à-vis de la température avec l'ustensile de cuisine qui est posé dessus.

Ainsi, la bouilloire ou la théière doit disposer d'un dispositif de limitation ou de régulation passif, ne permettant pas un retour d'information vers le générateur à induction électromagnétique, en particulier une information de température.

En outre, il est connu du document WO2016074743 une bouilloire pour chauffer un fluide sur une plaque de cuisson à induction, comprenant un récipient en matériau non ferromagnétique, ledit récipient comprenant un dispositif de levage de plaque ferromagnétique destiné à être chauffée par un générateur à induction électromagnétique.

Le dispositif de levage comprend un élément en matériau à mémoire de forme agencé séparément d'un compartiment de fluide et un élément intermédiaire s'étendant entre l'élément en matériau à mémoire de forme et la plaque ferromagnétique.

L'élément en matériau à mémoire de forme présente un premier état au cours duquel l'élément en matériau à mémoire de forme est dilaté en dessous d'une première température déterminée et un second état au cours duquel l'élément en matériau à mémoire de forme est contracté au-dessus d'une seconde température déterminée, la seconde température étant supérieure à la première température.

Au cours d'un échauffement, l'élément en matériau à mémoire de forme passe de son premier état vers son second état, et l'élément intermédiaire soulève la plaque ferromagnétique de la partie inférieure du récipient.

En se soulevant, la table à induction détecte une absence de la plaque ferromagnétique et passe dans un mode de sécurité pendant une durée prédéterminée à partir de la détection de l'absence de la plaque ferromagnétique et au bout de laquelle l'alimentation de l'inducteur est interrompue si aucun élément ferromagnétique n'est détecté à nouveau.

Au cours d'un refroidissement, l'élément en matériau à mémoire de forme passe de son deuxième état à son premier état, et l'élément intermédiaire abaisse la plaque ferromagnétique sur la partie inférieure du récipient.

En s'abaissant, la table à induction détecte à nouveau la présence de la plaque ferromagnétique et se remet à chauffer la plaque ferromagnétique.

Une telle bouilloire permet de conférer une fonction de régulation en température à une bouilloire compatible induction sur une plaque à induction standard.

Cependant, le dispositif utilisé pour réaliser la fonction de régulation en température dans une telle bouilloire est peu fiable et réduit la durée de vie de la bouilloire.

Aussi, la présente invention a pour but de résoudre tout ou partie des inconvénients mentionnés ci-dessus, notamment en proposant un dispositif de limitation ou de régulation en température simple et fiable.

A cet effet, l'invention se rapporte à un dispositif de limitation ou de régulation en température pour un ustensile de cuisine, destiné à être chauffé par un générateur à induction électromagnétique, ledit dispositif comprenant :
- un corps de maintien d'un bobinage, ledit corps de maintien comprenant une partie non magnétique et non conductrice destinée à venir en regard du générateur à induction électromagnétique par rapport au bobinage,
- le bobinage maintenu par le corps de maintien et isolé électriquement du corps de maintien, et
- un moyen de transition d'impédance relié au bobinage et présentant :
- un premier état de fonctionnement dans lequel le bobinage est placé dans un premier état électrique de haute impédance,
- un deuxième état de fonctionnement dans lequel le bobinage est placé dans un deuxième état électrique de basse impédance,
ledit dispositif présentant un mode de fonctionnement thermique dans lequel le moyen de transition d'impédance passe de son premier état de fonctionnement vers son deuxième état de fonctionnement et inversement en fonction de conditions de températures prédéterminées du moyen de transition d'impédance.

Cette disposition permet d'induire un courant électrique alternatif dans le bobinage lorsque le moyen de transition d'impédance est dans son deuxième état de fonctionnement. La circulation de ce courant électrique alternatif va ainsi générer un champ magnétique qui du fait de la loi de Lenz va venir s'opposer au champ magnétique variable généré par le générateur à induction électromagnétique. Celui-ci va alors détecter un défaut et interrompre son alimentation.

Ainsi, il est possible de réaliser un dispositif de limitation ou de régulation fiable, simple à réaliser et permettant un fonctionnement avec tout type de générateurs à induction électromagnétique.
Selon un aspect de l'invention, en plus du mode de fonctionnement thermique, le dispositif présente un mode de fonctionnement contraint dans lequel le moyen de transition d'impédance passe de son premier état de fonctionnement vers son deuxième état de fonctionnement et inversement en fonction d'une commande prééminente de changement d'état du moyen de transition d'impédance déclenchée par l'utilisateur.

Le fait que le moyen de transition d'impédance puisse changer d'état de fonctionnement sous l'action d'une commande prééminente de la part de l'utilisateur permet à l'utilisateur de contrôler la température de l'ustensile de cuisine en faisant abstraction des conditions de températures prédéterminées.

Selon un aspect de l'invention, le moyen de transition d'impédance comprend un seul composant électronique passif, ce qui ne confère au dispositif que la possibilité de fonctionner selon le mode de fonctionnement thermique, ou bien le moyen de transition d'impédance comprend un composant électronique passif et un composant électronique actif disposés en parallèle et reliés au bobinage, ce qui confère au dispositif la possibilité de fonctionner selon le mode de fonctionnement thermique ou selon le mode de fonctionnement contraint.

Ainsi, l'état de fonctionnement du moyen de transition d'impédance peut dépendre des seules conditions de température appliquées au moyen de transition d'impédance, auquel cas l'utilisateur n'a pas de contrôle sur l'état de fonctionnement du moyen de transition d'impédance, ou bien l'état de fonctionnement du moyen d'impédance peut dépendre des conditions de température appliquées au moyen de transition d'impédance mais aussi d'une commande prééminente de la part de l'utilisateur, auquel cas l'utilisateur conserve une possibilité de contrôle de l'état de fonctionnement du moyen de transition d'impédance.

Un tel composant électronique passif est par exemple un bilame.

Un tel composant électronique actif est adapté à interrompre le passage d'un courant alternatif, un tel composant actif est par exemple un triac. Dans ce cas, le composant électronique passif pourra être alimenté en énergie par une pile, une batterie ou bien un dispositif de récupération d'énergie.

En effet, étant donné que la fonction du composant électronique actif est de pouvoir proposer un mode de fonctionnement contraint en plus du mode de fonctionnement thermique, et que la limitation ou la régulation n'ont un intérêt qu'après un temps de chauffe alors il est concevable de pouvoir récupérer une partie de l'énergie au cours de ce temps de chauffe pour pouvoir par exemple charger un accumulateur d'un dispositif de récupération d'énergie.

Selon un aspect de l'invention, le moyen de transition d'impédance est dans son premier état de fonctionnement et le bobinage dans son premier état électrique de haute impédance lorsqu'au cours d'un échauffement du moyen de transition d'impédance, la température du moyen de transition d'impédance demeure inférieure à une valeur de température de transition vers une basse impédance prédéterminée, et le moyen de transition d'impédance est dans son deuxième état de fonctionnement et le bobinage dans son deuxième état électrique de basse impédance pendant une période finie lorsqu'au cours d'un refroidissement du moyen de transition d'impédance et après que la température du moyen de transition d'impédance ait atteint ladite valeur de température de transition vers une basse impédance prédéterminée, la température du moyen de transition d'impédance demeure supérieure à une valeur de température de transition vers une haute impédance prédéterminée, ladite période finie étant supérieure à une durée prédéterminée d'un mode de sécurité du générateur à induction électromagnétique, le générateur à induction électromagnétique basculant dans ledit mode de sécurité lors d'une détection d'absence d'un ustensile de cuisine compatible à chauffer par induction.

Cette disposition permet d'obtenir un dispositif de limitation en température pour un ustensile de cuisine destiné à être chauffé par un générateur à induction électromagnétique.

Le deuxième état de fonctionnement du moyen de transition d'impédance permet de fermer le bobinage et donc de faire baisser son impédance.

Plus précisément, la fermeture du bobinage autorise une circulation de courant alternatif induit dans le bobinage générant ainsi un champ magnétique qui vient s'opposer au flux magnétique variable créé par le générateur à induction électromagnétique.

La génération de ce champ magnétique est interprétée par l'électronique de commande du générateur à induction électromagnétique comme une mauvaise charge ou la présence d'un ustensile de cuisine non adapté à être chauffé par induction, voire comme une absence de l'ustensile de cuisine sur le foyer à induction.

L'électronique de commande du générateur à induction électromagnétique va alors basculer dans un mode de sécurité pendant une durée prédéterminée au cours de laquelle il cesse de fournir de l'énergie à l'ustensile de cuisine jusqu'à ce que la présence d'un ustensile de cuisine sur le foyer à induction soit à nouveau détectée au cours de cette durée prédéterminée du mode de sécurité.

Par ailleurs, étant donné que le mode de sécurité présente une durée limitée prédéterminée, d'environ une minute, et que le dispositif de limitation est agencé pour que le moyen de transition d'impédance soit dans son deuxième état de fonctionnement pendant une durée finie supérieure à la durée limitée prédéterminée du mode de sécurité, alors l'alimentation en puissance du générateur à induction électromagnétique sera interrompue définitivement après que la température du moyen de transition d'impédance ait atteint la valeur de la température de transition vers une basse impédance.

La chauffe est ainsi limitée à une valeur définie par la valeur de température de transition vers une basse impédance prédéterminée. Une fois cette valeur atteinte, l'ustensile de cuisine refroidit au cours du temps.

Selon un aspect de l'invention, le moyen de transition d'impédance est dans son premier état de fonctionnement et le bobinage dans son premier état électrique de haute impédance lorsqu'au cours d'un échauffement du moyen de transition d'impédance, la température du moyen de transition d'impédance demeure inférieure à une valeur de température de transition vers une basse impédance prédéterminée, et le moyen de transition d'impédance est dans son deuxième état de fonctionnement et le bobinage dans son deuxième état électrique de basse impédance pendant une période finie lorsqu'au cours d'un refroidissement du moyen de transition d'impédance et après que la température du moyen de transition d'impédance ait atteint ladite valeur de température de transition vers une basse impédance prédéterminée, la température du moyen de transition d'impédance demeure supérieure à une valeur de température de transition vers une haute impédance prédéterminée, ladite période finie étant inférieure à une durée prédéterminée d'un mode de sécurité du générateur à induction électromagnétique, le générateur à induction électromagnétique basculant dans ledit mode de sécurité lors d'une détection d'absence d'un ustensile de cuisine compatible à chauffer par induction.

Cette disposition permet d'obtenir un dispositif de régulation en température pour un ustensile de cuisine destiné à être chauffé par un générateur à induction électromagnétique.

A la différence du dispositif de limitation, le moyen de transition d'impédance va repasser dans son premier état de fonctionnement et le bobinage dans son premier état électrique de haute impédance lorsqu'après avoir atteint la valeur de température de transition vers une basse impédance prédéterminée, la température au cours du refroidissement du moyen de transition d'impédance atteint la valeur de température de transition vers une haute impédance prédéterminée.

Plusieurs cycles sont ainsi reproduits pour obtenir une régulation entre la valeur de température de transition vers une basse impédance prédéterminée et la valeur de température de transition vers une haute impédance prédéterminée.

Bien entendu, plus l'écart entre ces deux valeurs de température sera petit, plus la régulation en température sera précise.

Bien entendu, du fait de l'inertie thermique qui dépendra du contenu introduit dans le récipient de cuisson, au cours de l'échauffement la température du moyen de transition d'impédance excédera légèrement la valeur définie pour la température de transition vers une basse impédance.

Selon un aspect de l'invention, le dispositif de limitation ou le dispositif de régulation comprend des moyens de réglage de la valeur de température de transition vers une basse impédance prédéterminée et/ou de la valeur de température de transition vers une haute impédance prédéterminée.

Cette disposition permet à un utilisateur de faire varier la valeur de la température limite à ne pas dépasser ou bien de régler la valeur de la température cible pour une régulation.

Selon un exemple n'appartenant pas à l'invention , le corps de maintien présente la forme d'un disque et le bobinage comprend plusieurs spires réparties selon le diamètre du disque.

Cette disposition permet de dimensionner le bobinage en fonction des générateurs à induction électromagnétique standards disponibles sur le marché.

Selon un exemple n'appartenant pas à l'invention, le bobinage est réalisé en fil de Litz afin de diminuer les pertes dans une plage de fréquence de fonctionnement du générateur à induction électromagnétique, typiquement de 20 kHz à 100 kHz.

Cette disposition permet également de dimensionner le bobinage en fonction des générateurs à induction électromagnétique standards disponibles sur le marché.

Selon un exemple n'appartenant pas à l'invention, le bobinage s'étend sensiblement selon un même plan.

Cette disposition permet d'optimiser l'effet de la génération du champ électrique dans le bobinage sur le flux magnétique généré par le générateur à induction électromagnétique lorsque le moyen de transition d'impédance est dans son deuxième état de fonctionnement et le bobinage dans son deuxième état électrique de basse impédance.

Selon un exemple n'appartenant pas à l'invention, le bobinage est situé de 1 à 20 mm au-dessus d'une zone de contact de l'ustensile de cuisine destinée à venir au contact d'un foyer du générateur à induction électromagnétique.

Cette disposition permet également d'optimiser l'effet de la génération du champ magnétique dans le bobinage sur le flux magnétique généré par le générateur à induction électromagnétique lorsque le moyen de transition d'impédance est dans son deuxième état de fonctionnement et le bobinage dans son deuxième état électrique de basse impédance.

Selon un exemple n'appartenant pas à l'invention, le bobinage est réalisé en cuivre ou en aluminium mais de préférence en cuivre.

Selon un aspect de l'invention, le corps de maintien en plus de la première partie comprend une deuxième partie destinée à être positionnée en opposition du générateur à induction électromagnétique par rapport au bobinage, ladite deuxième partie comprenant des couches superposées choisies parmi des matériaux compatibles avec l'induction comme l'inox, l'acier, le cuivre ou le nickel, ou bien des matériaux non compatibles avec l'induction comme l'aluminium, un polymère ou un élastomère adapté à la tenue en température, ou alors une association de ces différents matériaux.

Selon un aspect de l'invention, le bobinage comprend un dispositif de temporisation de l'établissement d'un courant dans le bobinage, de préférence une inductance branchée en série avec le moyen de transition d'impédance.

Cette disposition permet au dispositif d'être compatible avec un plus grand nombre de types de générateurs à induction électromagnétique, en particulier des générateurs à induction électromagnétique du type à demi-ponts qui, sans un tel dispositif, provoqueraient une montée de courant trop rapide dans l'inducteur pouvant endommager ses composants de puissance.

Selon un aspect de l'invention, le moyen de transition d'impédance comprend un contact électrique passif à mémoire de forme, tel un bilame, ou bien un contact électrique passif à mémoire de forme et un composant électronique actif adapté à interrompre le passage d'un courant alternatif, par exemple un transistor ou un triac.

L'utilisation d'un bilame permet de réaliser de manière simple un moyen de transition d'impédance présentant deux états en fonction de températures.

Selon un aspect de l'invention, le bilame est réalisé en un alliage de métaux, par exemple à base de base de fer, et de nickel et/ou de chrome.

La présente invention a également pour objet un kit comprenant une pluralité de dispositifs de limitation et/ou de régulation en température telles que décrits précédemment, chaque dispositif comprenant un moyen de transition d'impédance dans lequel le premier état de fonctionnement et le deuxième état de fonctionnement sont déterminés selon des valeurs de température de transition vers une basse impédance prédéterminées différentes, et le cas échéant selon des valeurs de température de transition vers une haute impédance prédéterminées différentes.

Cette disposition permet un large choix d'utilisation d'ustensiles de cuisine présentant chacun une fonction de limitation ou de régulation en température avec des températures de limitation ou de régulation différentes.

Selon un aspect de l'invention, chaque dispositif de limitation et/ou de régulation en température est un dispositif adaptateur destiné à être disposé entre une plaque vitrocéramique d'un générateur à induction électromagnétique et le fond d'un ustensile de cuisine.

Cette disposition permet à un utilisateur d'utiliser des ustensiles de cuisine existants avec un générateur à induction électromagnétique tout en disposant d'une fonction de limitation ou de régulation en température.

Selon un aspect du kit, le corps de maintien de chaque dispositif adaptateur comprend une portion réalisée en matériaux ferromagnétique destinée à être chauffée par induction, ladite portion comprend une tôle en inox et est surmontée d'une plaque en aluminium.

Selon un aspect du kit, chaque dispositif adaptateur est réalisé entièrement en matériaux non ferromagnétique.

La présente invention a également pour objet un ustensile de cuisine pour chauffer un aliment ou un fluide à partir d'un générateur à induction électromagnétique, en particulier une bouilloire, une théière, une poêle, une casserole ou un bol d'appareil électroménager, comprenant un fond dans lequel est inséré un dispositif de limitation ou de régulation en température tel que décrits précédemment.

Selon un aspect de l'invention, le fond de l'ustensile de cuisine comprend un logement agencé pour recevoir chacun des dispositifs de limitation ou de régulation en température d'un kit tel que décrit précédemment, ledit logement et chacun des dispositifs de limitation ou de régulation en température d'un kit tel que décrit précédemment comprenant des moyens de fixation complémentaires.

Cette disposition permet de réaliser une fonction de limitation ou de régulation en température avec des températures de limitation ou de régulation différentes, et cela avec un seul et même ustensile de cuisine.

La présente invention se rapporte également à un ensemble comprenant au moins un dispositif de limitation ou de régulation tel que décrit précédemment et un ustensile de cuisine tel que décrit précédemment.

D'autres avantages et caractéristiques de l'invention ressortiront mieux à la lecture de la description détaillée de l'invention faite à titre illustratif et non limitatif en référence aux figures qui illustrent tout ou partie d'un dispositif de limitation ou de régulation en température selon l'invention ainsi que certains ustensiles de cuisine dans lesquels un tel dispositif peut être intégré.
Les figures 1 et 2 illustrent le fonctionnement d'un dispositif de limitation ou de régulation en température pour un ustensile de cuisine destiné à être chauffé par un générateur à induction électromagnétique selon l'invention.
La figure 3 illustre un ustensile de cuisine comprenant un dispositif de limitation ou de régulation en température selon l'invention.
La figure 4 est une vue agrandie du fond de l'ustensile de cuisine illustré à la figure 3.
La figure 5 est un graphe illustrant le fonctionnement d'un dispositif de limitation en température selon l'invention.
La figure 6 est un graphe illustrant le fonctionnement d'un dispositif de régulation en température selon l'invention.
La figure 7 montre un kit de trois dispositifs de limitation ou de régulation en température pour un ustensile de cuisine destiné à être chauffé par un générateur à induction électromagnétique selon l'invention.
La figure 8 montre un ensemble comprenant un ustensile de cuisine et un dispositif du kit de la figure 7 et dans lequel le dispositif selon l'invention est un dispositif adaptateur pour un ustensile de cuisine non compatible avec l'induction.
La figure 9 est une vue détaillée du dispositif adaptateur illustré à la figure 8.
La figure 10 montre un ensemble comprenant un ustensile de cuisine et un dispositif du kit de la figure 7 dans lequel le dispositif selon l'invention est inséré dans le fond de l'ustensile de cuisine.
La figure 11 est une vue détaillée du dispositif de limitation ou de régulation illustré à la figure 10.

Seuls les éléments nécessaires à la compréhension de l'invention ont été représentés. Pour faciliter la lecture des dessins, les mêmes éléments portent les mêmes références d'une figure à l'autre.

Le terme compatible avec l'induction doit être interprété comme étant susceptible d'être chauffé par une table à induction.

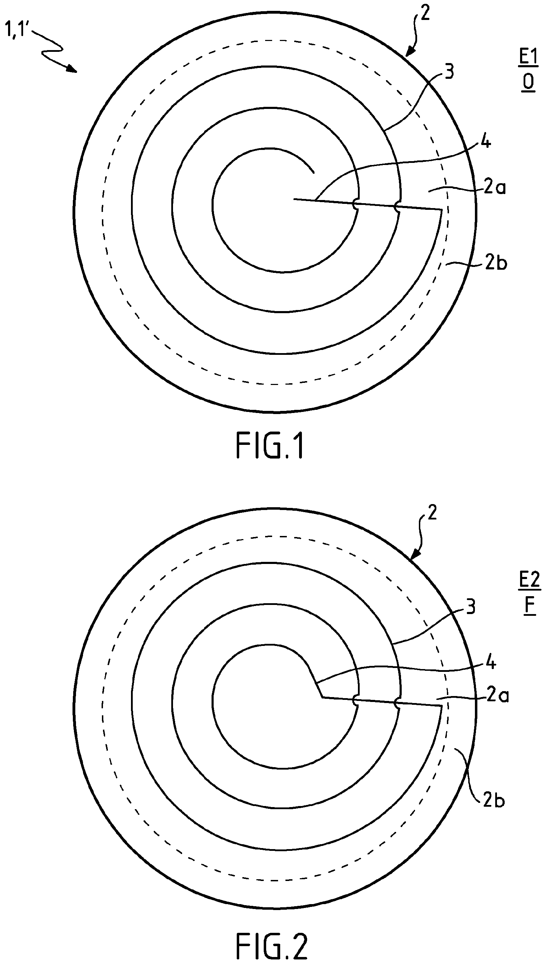

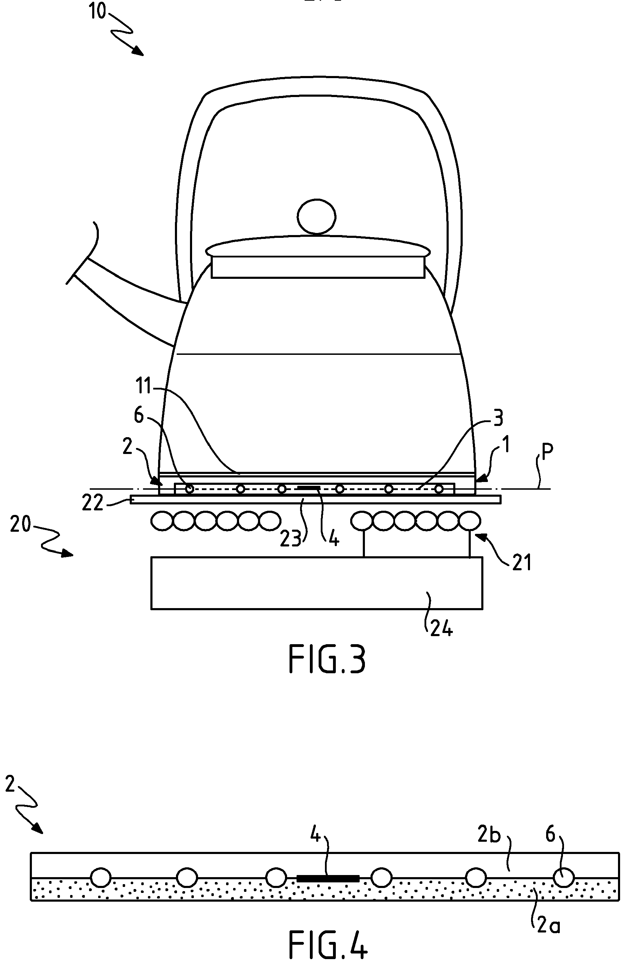

Comme illustré aux figures 1 à 3, un dispositif 1 de limitation ou de régulation en température selon l'invention pour un ustensile 10 de cuisine destiné à être chauffé par un générateur 20 à induction électromagnétique comprend un corps 2 de maintien d'un bobinage 3, ledit bobinage 3 et un moyen de transition d'impédance 4.

Le corps 2 de maintien comprend une première partie 2a non magnétique et non conductrice destinée à venir en regard du générateur 20 à induction électromagnétique par rapport au bobinage 3 et une deuxième partie 2b destinée à être disposée en opposition du générateur 20 à induction électromagnétique par rapport au bobinage 3.

Cette première partie 2a comprend par exemple des couches superposées choisies parmi des matériaux comme un polymère ou un élastomère adapté à la tenue en température, ou alors une association de ces différents matériaux.

En outre, la deuxième partie 2b du corps 2 de maintien comprend des couches superposées choisies parmi des matériaux compatibles avec l'induction comme l'inox, l'acier, le cuivre ou le nickel, ou bien des matériaux non compatibles avec l'induction comme de l'aluminium, un polymère ou un élastomère adapté à la tenue en température, ou alors une association de ces différents matériaux.

Le bobinage 3 est isolé électriquement du corps 2 de maintien.

Dans le mode de réalisation préférentiel illustré aux figures 1 à 4, le bobinage 3 est disposé dans l'épaisseur du corps 2 de maintien.

L'ustensile 10 de cuisine est par exemple une bouilloire, une théière, une poêle, une casserole ou bien encore un bol d'appareil électroménager.

Le corps 2 de maintien du bobinage 3 du dispositif 1 présente de préférence la forme d'un disque et le bobinage 3 s'étend sensiblement selon un même plan et comprend plusieurs spires 6 réparties selon le diamètre du disque.

Le bobinage 3 peut être maintenu dans le corps 2 de maintien par collage, par surmoulage ou bien par tout autre procédé assurant le maintien du bobinage 3 dans le corps 2 de maintien.

Le bobinage 3 peut être réalisé en aluminium mais est préférentiellement réalisé en cuivre.

Enfin, le moyen de transition d'impédance 4 peut comprendre un composant électronique passif, tel un contact électrique à mémoire de forme assurant un mode de fonctionnement thermique du dispositif 1 ou bien un composant électronique passif assurant un mode de fonctionnement thermique du dispositif 1 et un composant électronique actif assurant un mode de fonctionnement contraint du dispositif.

Dans l'exemple présenté, le moyen de transition d'impédance 4 assure uniquement un mode de fonctionnement thermique du dispositif 1 et comprend seulement un contact électrique à mémoire de forme, par exemple un bilame réalisé en un alliage de métaux à base de fer, et de nickel et/ou de chrome.

Le moyen de transition d'impédance 4 est disposé entre deux extrémités du bobinage 3.

De préférence, le moyen de transition d'impédance 4 est disposé dans une zone du dispositif 1 où le module du champ magnétique variable généré par le générateur 20 à induction électromagnétique est relativement faible par rapport à une autre zone du dispositif 1.

Le moyen de transition d'impédance 4 peut également être protégé par un écran magnétique (non illustré).

Le plan P dans lequel s'étendent les spires 6 du bobinage 3 du dispositif 1 de limitation ou de régulation en température est situé à une distance de 1 à 10 mm au-dessus d'une zone de contact de l'ustensile 10 de cuisine destinée à venir au contact d'un foyer à induction 23 du générateur 20 à induction électromagnétique.

Lorsque le dispositif 1 est dans son mode de fonctionnement thermique, alors le moyen de transition d'impédance 4 présente deux états de fonctionnement E1, E2 dans lequel le bobinage 3 est placé respectivement dans un premier état électrique O de haute impédance ou un deuxième état électrique F de basse impédance en fonction de seules conditions de températures prédéterminées du moyen de transition d'impédance 4.

Ces deux états de fonctionnement E1, E2 sont détaillés plus en avant dans le texte.

Le générateur 20 à induction électromagnétique est du type standard et présente quant à lui un inducteur 21, une plaque vitrocéramique 22 et le foyer à induction 23.

On entend par standard un générateur à induction électromagnétique qui ne dispose pas de moyens spécifiques de commande pour réaliser la fonction de limitation ou de régulation en température, et notamment qui ne permet pas un retour d'information de l'ustensile 10 de cuisine. Un tel générateur à induction électromagnétique fonctionne donc en boucle ouverte vis-à-vis de la température avec l'ustensile 10 de cuisine qui est posé dessus.

L'inducteur 21 est positionné en dessous de la plaque vitrocéramique 22 et est piloté par une électronique de commande 24 pour générer un champ magnétique variable, usuellement dans des fréquences allant de 20 kHz à 100 kHz.

Le foyer à induction 23 délimite une zone supérieure de la plaque vitrocéramique 22 sur laquelle l'ustensile 10 de cuisine est en contact.

L'ustensile 10 de cuisine est de préférence disposée de manière centrée sur le foyer à induction 23.

Selon les propriétés intrinsèques de température et le positionnement du moyen de transition d'impédance 4, le dispositif 1 de limitation ou de régulation réalise la fonction de limitation ou bien la fonction de régulation.

Lorsque le dispositif 1 est configuré pour exécuter la fonction de limitation alors le moyen de transition d'impédance 4 présente :
- un premier état de fonctionnement E1 dans lequel le bobinage 3 est placé dans un premier état électrique O de haute impédance lorsqu'au cours d'un échauffement du moyen de transition d'impédance 4, la température Temp du moyen de transition d'impédance 4 demeure inférieure à une valeur de température de transition vers une basse impédance TempF prédéterminée, et
- un deuxième état de fonctionnement E2 dans lequel le bobinage 3 est placé dans un deuxième état électrique F de basse impédance pendant une période finie T2 lorsqu'au cours d'un refroidissement du moyen de transition d'impédance 4 et après que la température Temp du moyen de transition d'impédance 4 ait atteint ladite valeur de température de transition vers une basse impédance TempF prédéterminée, la température Temp du moyen de transition d'impédance demeure supérieure à une valeur de température de transition vers une haute impédance TempO prédéterminée, ladite période finie T2 étant supérieure à une durée prédéterminée TMS d'un mode de sécurité du générateur 20 à induction électromagnétique, le générateur 20 à induction électromagnétique basculant dans ledit mode de sécurité lors d'une détection d'absence d'un ustensile 10 de cuisine compatible à chauffer par induction.

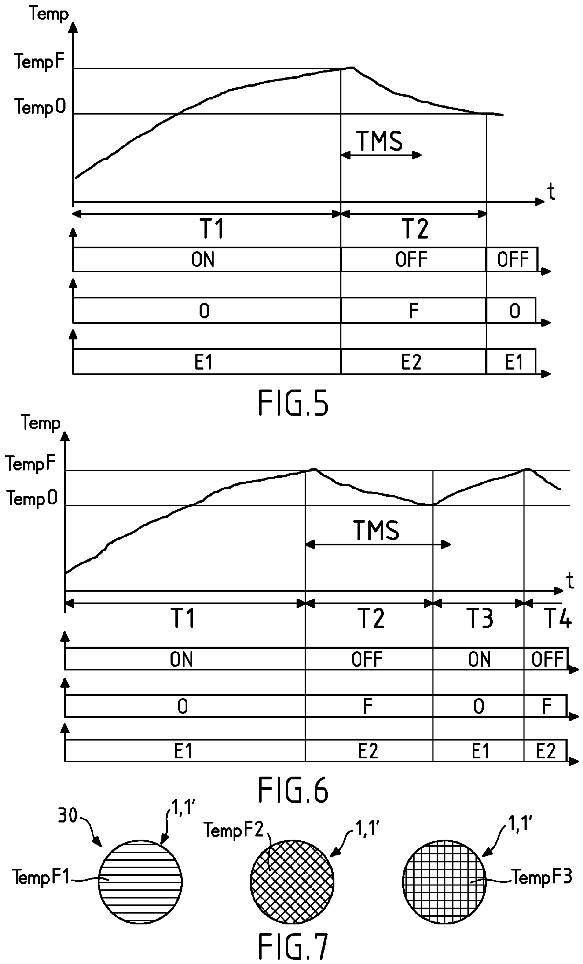

L'influence de la température sur un basculement du moyen de transition d'impédance 4 depuis son premier état de fonctionnement E1 vers son deuxième état de fonctionnement E2, et inversement, ainsi que les conséquences de ce basculement sur le bobinage 3 et sur le générateur 20 à induction électromagnétique sont représentées sur les différents graphes de la figure 5.

Comme illustré à la figure 5, dans une utilisation normale d'un ustensile 10 de cuisine dont le fond 11 comprend un dispositif 1 de limitation selon l'invention et qui serait disposé sur le foyer à induction 23 d'un générateur 20 à induction électromagnétique, alors la température Temp du dispositif 1 et en particulier du moyen de transition d'impédance 4 s'échauffe pendant une première période de temps T1 jusqu'à ce que la température Temp atteigne la valeur de température de transition vers une basse impédance TempF prédéterminée.

Au cours de cette première période de temps T1, le moyen de transition d'impédance 4 est dans son premier état de fonctionnement E1 et les spires 6 du bobinage 3 ne sont pas fermées électriquement. Le bobinage 3 est donc dans son premier état électrique O de haute impédance.

Le générateur 20 à induction électromagnétique est alors dans un état de marche ON dans lequel il fournit de l'énergie à l'ustensile 10 de cuisine qui s'échauffe.

Au cours de cette première période T1, dans le cas où le moyen de transition d'impédance 4 comprendrait un composant électronique actif assurant un mode de fonctionnement contraint du dispositif, alors une partie de l'énergie peut être récupérée, par exemple pour charger un accumulateur d'un dispositif de récupération d'énergie destiné à alimenter le composant électronique actif.

Lorsque la température Temp atteint la valeur de température de transition vers une basse impédance TempF prédéterminée alors le moyen de transition d'impédance 4 bascule dans son deuxième état de fonctionnement E2 et les spires 6 du bobinage 3 sont fermées. Le bobinage 3 bascule donc vers son deuxième état électrique F de basse impédance.

A ce moment-là, le générateur 20 à induction électromagnétique détecte un défaut de présence de l'ustensile 10 de cuisine et bascule dans un mode de sécurité dans lequel il cesse de fournir de l'énergie à l'ustensile 10 de cuisine.

Le générateur 20 à induction électromagnétique est alors dans un état d'arrêt OFF.

Bien entendu, du fait de l'inertie thermique qui dépendra du contenu introduit dans l'ustensile 10 de cuisine, au cours de l'échauffement la température Temp du moyen de transition d'impédance 4 excédera légèrement la valeur définie pour la température de transition vers une basse impédance TempF.

La durée prédéterminée TMS du mode de sécurité à partir du moment où l'absence de l'ustensile 10 de cuisine est détectée, est prédéterminée dans les réglages d'usine du générateur 20 à induction électromagnétique. Cette durée prédéterminée TMS est d'environ une minute.

À partir de ce moment-là, la température Temp du moyen de transition d'impédance 4 va commencer à diminuer.

Au bout d'une deuxième période finie T2 de refroidissement, le moyen de transition d'impédance 4 va atteindre une valeur de température de transition vers une haute impédance TempO prédéterminée et va basculer vers son premier état de fonctionnement E1 dans lequel le bobinage 3 est placé dans un état électrique O de haute impédance.

Cette deuxième période T2 est une période finie dépendant des propriétés intrinsèques du moyen de transition d'impédance 4 et de son positionnement par rapport au bobinage 3 mais dépendant également de l'inertie du contenu introduit dans l'ustensile 10 de cuisine et des conditions thermiques environnantes.

Ainsi, plus le contenu introduit dans l'ustensile 10 de cuisine a une diffusivité thermique faible alors plus la deuxième période finie T2 pour atteindre la valeur de température de transition vers une haute impédance TempO prédéterminée sera long.

Etant donné que la durée prédéterminée TMS du mode de sécurité du générateur 20 à induction électromagnétique est inférieure à la deuxième période finie T2 au bout de laquelle le moyen de transition d'impédance 4 bascule vers son premier état E1 de fonctionnement alors au bout de cette deuxième période finie T2 le générateur 20 à induction électromagnétique demeurera dans son état d'arrêt OFF et ne fournira pas d'énergie à l'ustensile 10 de cuisine.

Il faudra donc que l'utilisateur réalise une nouvelle mise en route du générateur 20 à induction électromagnétique pour pouvoir chauffer à nouveau l'ustensile 10 de cuisine et pouvoir retomber dans une situation analogue à celle qui se produit au cours de la première période de temps T1 de chauffe.

Par ailleurs, lorsque le dispositif 1 est configuré pour exécuter la fonction de régulation alors le moyen de transition d'impédance 4 présente :
- un premier état de fonctionnement E1 dans lequel le bobinage 3 est placé dans un premier état électrique O de haute impédance lorsqu'au cours d'un échauffement du moyen de transition d'impédance 4, la température Temp du moyen de transition d'impédance 4 demeure inférieure à une valeur de température de transition vers une basse impédance TempF prédéterminée, et
- un deuxième état de fonctionnement E2 dans lequel le bobinage 3 est placé dans un deuxième état électrique F de basse impédance pendant une période finie T2 lorsqu'au cours d'un refroidissement du moyen de transition d'impédance 4 et après que la température Temp du moyen de transition d'impédance 4 ait atteint ladite valeur de température de transition vers une basse impédance TempF prédéterminée, la température Temp du moyen de transition d'impédance 4 demeure supérieure à une valeur de température de transition vers une haute impédance TempO prédéterminée, ladite période finie T2 étant inférieure à une durée prédéterminée TMS d'un mode de sécurité du générateur 20 à induction électromagnétique, le générateur 20 à induction électromagnétique basculant dans ledit mode de sécurité lors d'une détection d'absence d'un ustensile 10 de cuisine compatible à chauffer par induction.

L'influence de la température sur un basculement du moyen de transition d'impédance 4 depuis son premier état de fonctionnement E1 vers son deuxième état de fonctionnement E2, et inversement, ainsi que les conséquences de ce basculement sur le bobinage 3 et sur le générateur 20 à induction électromagnétique sont représentées sur les différents graphes de la figure 6.

Comme illustré à la figure 6, dans une utilisation normale d'un ustensile 10 de cuisine dont le fond 11 comprend un dispositif 1 de régulation selon l'invention et qui serait disposé sur le foyer à induction 23 d'un générateur 20 à induction électromagnétique standard alors la température Temp du dispositif 1 et en particulier du moyen de transition d'impédance 4 s'échauffe pendant une première période de temps T1 jusqu'à ce que la température Temp atteigne la valeur de température de transition vers une basse impédance TempF prédéterminée.

Au cours de cette première période de temps T1, le moyen de transition d'impédance 4 est dans son premier état de fonctionnement E1 et les spires 6 du bobinage 3 ne sont pas fermées. Le bobinage 3 est donc dans son premier état électrique O de haute impédance.

Le générateur 20 à induction électromagnétique est alors dans un état de marche ON dans lequel il fournit de l'énergie à l'ustensile 10 de cuisine qui s'échauffe.

Au cours de cette première période de temps T1, dans le cas où le moyen de transition d'impédance 4 comprendrait un composant électronique actif assurant un mode de fonctionnement contraint du dispositif, alors une partie de l'énergie peut être récupérée, par exemple pour charger un accumulateur d'un dispositif de récupération d'énergie destiné à alimenter le composant électronique actif.

Lorsque la température Temp atteint la valeur de température de transition vers une basse impédance TempF prédéterminée alors le moyen de transition d'impédance 4 bascule vers son deuxième état de fonctionnement E2 et les spires 6 du bobinage 3 sont fermées. Le bobinage 3 bascule donc vers son deuxième état électrique F de basse impédance.

A ce moment-là, le générateur 20 à induction électromagnétique détecte un défaut de présence de l'ustensile 10 de cuisine et bascule dans un mode de sécurité dans lequel il cesse de fournir de l'énergie à l'ustensile 10 de cuisine.

Le générateur 20 à induction électromagnétique est alors dans un état d'arrêt OFF.

Bien entendu, du fait de l'inertie thermique qui dépendra du contenu introduit dans l'ustensile 10 de cuisine, au cours de l'échauffement la température Temp du moyen de transition d'impédance 4 excédera légèrement la valeur définie pour la température de transition vers une basse impédance TempF.

La durée prédéterminée TMS du mode de sécurité à partir du moment où l'absence de l'ustensile 10 de cuisine est détectée, est prédéterminée dans les réglages d'usine du générateur 20 à induction électromagnétique.

À partir de ce moment-là, la température Temp du moyen de transition d'impédance 4 va commencer à diminuer.

Au bout d'une deuxième période finie T2 de refroidissement, le moyen de transition d'impédance 4 va atteindre une valeur de température de transition vers une haute impédance TempO prédéterminée et va basculer vers son premier état de fonctionnement E1 dans lequel le bobinage 3 est placé dans son premier état électrique O de haute impédance.

Cette deuxième période finie T2 est une période de durée finie dépendant des propriétés intrinsèques du moyen de transition d'impédance 4 et de son positionnement par rapport au bobinage 3 mais dépendant également de l'inertie du contenu introduit dans l'ustensile 10 de cuisine et des conditions thermiques environnantes.

Ainsi, plus le contenu introduit dans l'ustensile 10 de cuisine a une diffusivité thermique faible alors plus la deuxième période finie T2 pour atteindre la valeur de température de transition vers une haute impédance TempO prédéterminée sera long.

Étant donné que la durée prédéterminée TMS du mode de sécurité du générateur 20 à induction électromagnétique est supérieure à la deuxième période finie T2 au bout de laquelle le moyen de transition d'impédance 4 bascule vers son premier état de fonctionnement E1 alors au bout de cette deuxième période finie T2 le générateur 20 à induction électromagnétique détectera à nouveau la présence de l'ustensile 10 de cuisine sur son foyer à induction 23, basculera dans un état de marche ON et fournira à nouveau de l'énergie à l'ustensile 10 de cuisine.

A partir de là, l'ustensile 10 de cuisine est chauffé à nouveau par le générateur 20 à induction électromagnétique pendant une troisième période T3 jusqu'à ce que la température Temp du moyen de transition d'impédance 4 atteigne à nouveau la valeur de température de transition vers une basse impédance TempF prédéterminée.

Le comportement du dispositif 1 de régulation au cours de cette troisième période T3 est analogue au comportement du dispositif 1 de régulation au cours de la première période de temps

C'est ainsi qu'à partir de ce moment-là, la température Temp du moyen de transition d'impédance 4 va commencer à diminuer.

Au bout d'une quatrième période finie T4 de refroidissement, la température Temp du moyen de transition d'impédance 4 va atteindre une valeur de température de transition vers une haute impédance TempO prédéterminée et va basculer à nouveau vers son premier état de fonctionnement E1.

Le comportement du dispositif 1 de régulation au cours de cette quatrième période finie T4 est analogue au comportement du dispositif 1 de régulation au cours de la deuxième période finie T2.

Ce cycle est ainsi reproduit indéfiniment jusqu'à ce que l'utilisateur décide volontairement d'arrêter le générateur 20 à induction électromagnétique, de retirer l'ustensile 10 de cuisine du foyer à induction 23 du générateur 20 sans le remettre avant la durée prédéterminée TMS du mode de sécurité ou bien qu'un dispositif de sécurité du générateur 20 à induction électromagnétique, par exemple un dispositif anti-débordement ou une temporisation, arrête le générateur 20 à induction électromagnétique.

Dans ce dispositif 1 de régulation, plus les valeurs de température de transition vers une basse impédance TempF prédéterminée et de transition vers une haute impédance TempO prédéterminée sont proches, plus la régulation de température sur la température cible correspondant à la valeur de température de transition vers une basse impédance TempF prédéterminée est précise.

Idéalement, le bobinage 3 est réalisé en fil de Litz afin de diminuer les pertes dans une plage de fréquence de fonctionnement du générateur 20 à induction électromagnétique, typiquement de 20kHz à 100 kHz.

Par exemple, les spires 6 en fil de Litz peuvent avoir un diamètre de 0,5 mm et de préférence 1 mm à 20 KHz et à température ambiante.

L'objectif est de trouver un compromis qui permette à la fois de minimiser les courants induits dans les spires 6 lors d'une période de chauffe de l'ustensile 10 de cuisine par le générateur 20 à induction électromagnétique, et de faire en sorte que le champ magnétique généré par le courant électrique alternatif circulant dans le bobinage 3 entraine la mise en défaut du générateur 20 à induction électromagnétique.

Par exemple, un diamètre de foyer induction de 20cm et un bobinage 3 de trois spires 6 en fil de Litz réparties le long du diamètre sont suffisants pour réaliser la fonction souhaitée.

Par ailleurs, il est possible de concevoir des moyens de réglage (non illustrés) de la valeur de température de transition vers une basse impédance TempF prédéterminée qui agissent sur le moyen de transition d'impédance 4, par exemple sur son positionnement par rapport au bobinage 3 lorsque le moyen de transition d'impédance 4 est un contact électrique passif à mémoire de forme du type bilame.

Ces moyens de réglage comprennent par exemple une vis de réglage de la distance entre une extrémité libre du contact électrique lorsque celui-ci est dans son deuxième état de fonctionnement E2 et une extrémité du bobinage 3.

Ainsi, plus on éloigne l'extrémité du bobinage 3 de l'extrémité libre du contact électrique plus la valeur de température de transition vers une basse impédance TempF prédéterminée sera élevée dans la limite du mouvement pouvant être réalisé par le contact électrique.

Cette vis de réglage peut également comporter des indices d'indexation de température pour indiquer à l'utilisateur une correspondance entre la position de la vis et la valeur de température de transition vers une basse impédance TempF prédéterminée.

De la même manière, il est possible de concevoir des moyens de réglage de la valeur de température de transition vers une haute impédance TempO prédéterminée.

Le réglage de cette valeur de température de transition vers une haute impédance TempO prédéterminée peut permettre à un utilisateur de configurer son dispositif 1 pour qu'il réalise la fonction de limitation ou bien pour qu'il réalise la fonction de régulation.

En effet, cette valeur influe directement sur la durée de la deuxième période finie T2 au bout de laquelle le moyen de transition d'impédance 4 bascule vers son premier état de fonctionnement E1 ouvert.

Par conséquent, si cette durée est supérieure à la durée prédéterminée TMS du mode de sécurité du générateur 20 à induction électromagnétique alors le dispositif 1 réalisera la fonction de limitation de température, et si cette durée est inférieure à la durée TMS du mode de sécurité du générateur 20 à induction électromagnétique alors le dispositif 1 réalisera la fonction de régulation de température.

Les moyens de réglage de la valeur de température de transition vers une basse impédance TempF prédéterminée et les moyens de réglage de la valeur de température de transition vers une haute impédance TempO prédéterminée peuvent être confondus.

Auquel cas l'utilisateur devra trouver un compromis entre une valeur de transition vers une basse impédance TempF prédéterminée relativement élevée mais une valeur de température de transition vers une haute impédance TempO prédéterminée proche de cette valeur de transition vers une basse impédance TempF prédéterminée permettant notamment de réaliser la fonction de régulation, ou bien une valeur de transition vers une basse impédance TempF prédéterminée relativement faible mais une valeur de température de transition vers une haute impédance TempO prédéterminée éloignée de cette valeur de transition vers une basse impédance TempF prédéterminée permettant notamment de réaliser la fonction de limitation.

Lorsque le dispositif 1 est dans son mode de fonctionnement contraint, alors le moyen de transition d'impédance 4 présente également les deux états de fonctionnement E1, E2 dans lequel le bobinage 3 est placé respectivement dans un premier état électrique O de haute impédance ou un deuxième état électrique F de basse impédance.

Néanmoins, à la différence du mode de fonctionnement thermique le bobinage 3 est placé dans l'un ou l'autre de ces deux états de fonctionnement E1, E2 en fonction d'une commande prééminente de changement d'état du moyen de transition d'impédance 4 déclenchée par l'utilisateur.

A cet effet, le moyen de transition d'impédance 4 comprend un composant électronique actif en plus du composant électronique passif.

Ces deux composants sont disposés en parallèle et reliés au bobinage 3.

Ainsi, l'état de fonctionnement du moyen de transition d'impédance 4 peut dépendre des seules conditions de température appliquées au moyen de transition d'impédance 4, auquel cas l'utilisateur n'a pas de contrôle sur l'état de fonctionnement du moyen de transition d'impédance 4, ou bien l'état de fonctionnement du moyen d'impédance 4 peut dépendre des conditions de température appliquées au moyen de transition d'impédance 4 mais aussi d'une commande de la part de l'utilisateur, auquel cas l'utilisateur conserve une possibilité de contrôle de l'état de fonctionnement du moyen de transition d'impédance 4, cette commande prééminente par rapport à celle pouvant être déclenchée par les conditions de température appliquées au moyen de transition d'impédance 4.

Le composant électronique actif est adapté à interrompre le passage d'un courant alternatif, ce composant est par exemple un transistor ou un triac.

En outre, le composant électronique actif peut être alimenté en énergie par une pile ou une batterie.

La batterie peut également être rechargée par un dispositif de récupération d'énergie d'une partie de l'énergie produite par le générateur 20 à induction électromagnétique.

La présente invention se rapporte également à un kit 30 comprenant une pluralité de dispositifs 1 de limitation en température tels que décrits précédemment, et/ou une pluralité de dispositifs 1 de régulation en température tels que décrits précédemment.

Chaque dispositif 1 de ce kit 30 comprend un moyen de transition d'impédance 4 dans lequel le premier état de fonctionnement E1 et le deuxième état de fonctionnement E2 sont déterminés selon des valeurs de température de transition vers une basse impédance TempF prédéterminées différentes.

La figure 7 illustre un kit 30 de trois dispositifs 1 de limitation ou de régulation en température.

Ces trois dispositifs 1 comprennent chacun un moyen de transition d'impédance 4 présentant chacun une valeur de température de transition vers une basse impédance TempF1, TempF2, TempF3 prédéterminé différente d'un autre dispositif 1 du kit 30.

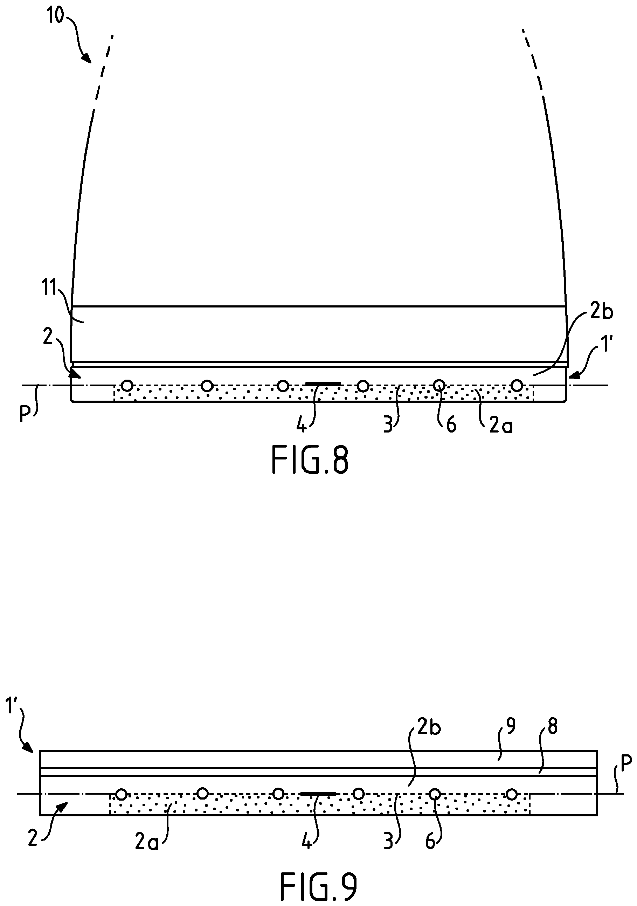

Comme illustré aux figures 8 et 9, chaque dispositif 1 du kit 30 peut être utilisé directement comme un dispositif adaptateur 1' destiné à être disposé entre une plaque vitrocéramique 22 d'un générateur 20 à induction électromagnétique et le fond 11 d'un ustensile 10 de cuisine.

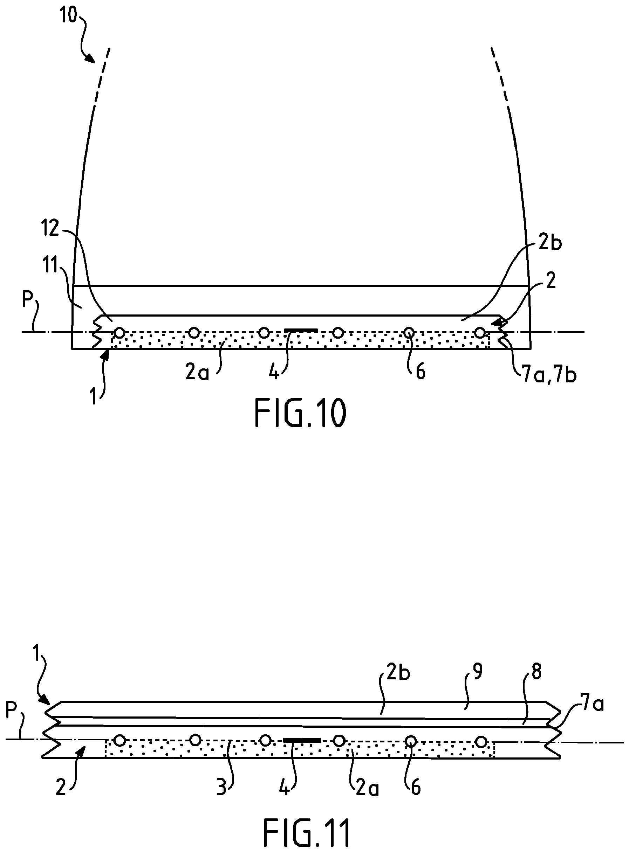

Comme illustré aux figures 10 et 11, chaque dispositif 1 du kit 30 peut également être inséré dans un logement 12 ménagé dans le fond 11 d'un ustensile 10 de cuisine.

Chaque dispositif 1 et le logement 12 comprennent alors des moyens de fixation complémentaires 7a 7b permettant de solidariser un dispositif 1 amovible à l'ustensile 10 de cuisine.

Ces moyens de fixations complémentaires 7a, 7b comprennent par exemple des filetages de forme complémentaire ménagés d'une part sur un bord de chaque dispositif 1 du kit 30 et ménagé d'autre part sur une bordure du logement 12 ménagé dans le fond 11 d'un ustensile 10 de cuisine.

D'autres moyens de fixation complémentaires sont également envisageables, par exemple une fixation du type quart de tour ou à baïonnette.

Selon une première variante, la deuxième partie 2b du corps 2 de maintien de chaque dispositif 1, 1' comprend une portion 8 réalisée en matériaux ferromagnétique destinée à être chauffée par induction.

Comme illustré aux figures 9 et 11, cette portion 8 du corps 2 de maintien comprend une tôle en inox et est surmontée par une plaque 9 en aluminium destinée à venir au contact du fond 11 de l'ustensile 10 de cuisine dans le logement 12 afin d'une part d'empêcher la tôle en inox de vriller sous l'effet de la chaleur et d'autre part afin de diffuser plus uniformément la chaleur à l'ustensile 10 de cuisine.

Ainsi, selon cette variante il n'est pas forcément nécessaire que l'ustensile 10 de cuisine soit réalisé dans un matériau compatible avec l'induction.

Selon une deuxième variante non illustrée, le corps 2 de maintien de chaque dispositif 1, 1' est entièrement réalisé en un matériau non ferromagnétique et n'est donc pas compatible avec l'induction.

Un tel matériaux peut par exemple être un polymère ou un élastomère adapté à la tenue en température.

Dans ce cas, au moins le fond 11 de l'ustensile 10 de cuisine doit être réalisé en un matériau ferromagnétique.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

## Revendications

1. Dispositif (1) de limitation ou de régulation en température pour un ustensile (10) de cuisine, destiné à être chauffé par un générateur (20) à induction électromagnétique, ledit dispositif (1) comprenant :
- un corps (2) de maintien d'un bobinage (3), ledit corps (2) de maintien comprenant une partie (2a) non magnétique et non conductrice destinée à venir en regard du générateur (20) à induction électromagnétique par rapport au bobinage (3),
- le bobinage (3) maintenu par le corps (2) de maintien, et
- un moyen de transition d'impédance (4) relié au bobinage (3) et présentant :
- un premier état de fonctionnement (E1) dans lequel le bobinage (3) est placé dans un premier état électrique (O) de haute impédance,
- un deuxième état de fonctionnement (E2) dans lequel le bobinage (3) est placé dans un deuxième état électrique (F) de basse impédance,
**caractérisé en ce que** ledit dispositif présentant un mode de fonctionnement thermique dans lequel le moyen de transition d'impédance (4) passe de son premier état de fonctionnement (E1) vers son deuxième état de fonctionnement (E2) et inversement en fonction de conditions de températures prédéterminées du moyen de transition d'impédance (4).

2. Dispositif (1) de limitation ou de régulation en température selon la revendication 1 dans lequel en plus du mode de fonctionnement thermique, le dispositif présente un mode de fonctionnement contraint dans lequel le moyen de transition d'impédance (4) passe de son premier état de fonctionnement (E1) vers son deuxième état de fonctionnement (E2) et inversement en fonction d'une commande prééminente de changement d'état du moyen de transition d'impédance (4) déclenchée par l'utilisateur.

3. Dispositif (1) de limitation en température selon l'une des revendications 1 ou 2, dans lequel lorsque le dispositif (1) est dans son mode de fonctionnement thermique :
- le moyen de transition d'impédance (4) est dans son premier état de fonctionnement (E1) et le bobinage (3) dans son premier état électrique (O) de haute impédance lorsqu'au cours d'un échauffement du moyen de transition d'impédance (4), la température (Temp) du moyen de transition d'impédance (4) demeure inférieure à une valeur de température de transition vers une basse impédance (TempF) prédéterminée, et
- le moyen de transition d'impédance (4) est dans son deuxième état de fonctionnement (E2) et le bobinage (3) dans son deuxième état électrique (F) de basse impédance pendant une période finie (T2) lorsqu'au cours d'un refroidissement du moyen de transition d'impédance (4) et après que la température (Temp) du moyen de transition d'impédance (4) ait atteint ladite valeur de température de transition vers une basse impédance (TempF) prédéterminée, la température (Temp) du moyen de transition d'impédance (4) demeure supérieure à une valeur de température de transition vers une haute impédance (TempO) prédéterminée, ladite période finie (T2) étant supérieure à une durée prédéterminée (TMS) d'un mode de sécurité du générateur (20) à induction électromagnétique, le générateur (20) à induction électromagnétique basculant dans ledit mode de sécurité lors d'une détection d'absence d'un ustensile (10) de cuisine compatible à chauffer par induction.

4. Dispositif (1) de régulation en température selon l'une des revendications 1 ou 2, dans lequel lorsque le dispositif (1) est dans son mode de fonctionnement thermique :
- le moyen de transition d'impédance (4) est dans son premier état de fonctionnement (E1) et le bobinage (3) dans son premier état électrique de haute impédance (O) lorsqu'au cours d'un échauffement du moyen de transition d'impédance (4), la température (Temp) du moyen de transition d'impédance (4) demeure inférieure à une valeur de température de transition vers une basse impédance (TempF) prédéterminée, et
- le moyen de transition d'impédance (4) est dans son deuxième état de fonctionnement (E2) et le bobinage (3) dans son deuxième état électrique (F) de basse impédance pendant une période finie (T2) lorsqu'au cours d'un refroidissement du moyen de transition d'impédance (4) et après que la température (Temp) du moyen de transition d'impédance (4) ait atteint ladite valeur de température de transition vers une basse impédance (TempF) prédéterminée, la température (Temp) du moyen de transition d'impédance (4) demeure supérieure à une valeur de température de transition vers une haute impédance (TempO) prédéterminée, ladite période finie (T2) étant inférieure à une durée prédéterminée (TMS) d'un mode de sécurité du générateur (20) à induction électromagnétique, le générateur (20) à induction électromagnétique basculant dans ledit mode de sécurité lors d'une détection d'absence d'un ustensile (10) de cuisine compatible à chauffer par induction.

5. Dispositif (1) selon l'une des revendications 3 ou 4, comportant des moyens de réglage de la valeur de température de transition vers une basse impédance (TempF) prédéterminée et/ou de la valeur de température de transition vers une haute impédance (TempO) prédéterminée.

6. Dispositif (1) selon l'une des revendications 1 à 5, dans lequel le corps (2) de maintien, en plus de la première partie (2a), comprend une deuxième partie (2b) destinée à être positionnée en opposition du générateur (20) à induction électromagnétique par rapport au bobinage (3), ladite deuxième partie (2b) comprenant des couches superposées choisies parmi des matériaux compatibles avec l'induction comme l'inox, l'acier, le cuivre ou le nickel, ou bien des matériaux non compatibles avec l'induction comme de l'aluminium, un polymère ou un élastomère adapté à la tenue en température, ou alors une association de ces différents matériaux.

7. Dispositif (1) selon l'une des revendications 1 à 6, dans lequel le bobinage (3) comprend un dispositif de temporisation de l'établissement d'un courant dans le bobinage (3), de préférence une inductance branchée en série avec le moyen de transition d'impédance (4).

8. Dispositif (1) selon l'une des revendications 1 à 7, dans lequel le moyen de transition d'impédance (4) comprend un contact électrique passif à mémoire de forme, ou bien un contact électrique passif à mémoire de forme et un composant électronique actif adapté à interrompre le passage d'un courant alternatif, par exemple un transistor ou un triac.

9. Kit (30) comprenant une pluralité de dispositifs (1) de limitation en température selon la revendication 3, et/ou une pluralité de dispositifs (1) de régulation en température selon la revendication 4, chaque dispositif (1) comprenant un moyen de transition d'impédance (4) dans lequel le premier état de fonctionnement (E1) et le deuxième état de fonctionnement (E2) sont déterminés selon des valeurs de température de transition vers une basse impédance (TempF) prédéterminés différentes, et le cas échéant selon des valeurs de température de transition vers une haute impédance (TempO) prédéterminés différentes.

10. Kit (30) selon la revendication 9, dans lequel chaque dispositif (1) de limitation et/ou de régulation en température est un dispositif adaptateur (1') destiné à être disposé entre une plaque vitrocéramique (22) d'un générateur (20) à induction électromagnétique et le fond (11) d'un ustensile (10) de cuisine.

11. Kit (30) selon la revendication 10, dans lequel le corps (2) de maintien de chaque dispositif adaptateur (1') comprend une portion (8) réalisée en matériaux ferromagnétique destinée à être chauffée par induction, ladite portion (8) comprenant une tôle en inox et est surmontée d'une plaque (9) en aluminium.

12. Kit (30) selon la revendication 10, dans lequel chaque dispositif adaptateur (1') est réalisé entièrement en matériaux non ferromagnétique.

13. Ustensile (10) de cuisine pour chauffer un aliment ou un fluide à partir d'un générateur (20) à induction électromagnétique, en particulier une bouilloire, une théière, une poêle, une casserole ou un bol d'appareil électroménager, comprenant un fond (11) dans lequel est inséré un dispositif (1) de limitation en température selon la revendication 3, ou un dispositif (1) de régulation en température selon la revendication 4.

14. Ustensile (10) de cuisine selon la revendication 13, dans lequel le fond (11) de l'ustensile (10) de cuisine comprend un logement (12) agencé pour recevoir chacun des dispositifs (1) de limitation ou de régulation en température d'un kit (30) selon la revendication 9, ledit logement (12) et chacun des dispositifs (1) de limitation ou de régulation en température d'un kit (30) selon la revendication 9 comprenant des moyens de fixation complémentaires (7a, 7b).

15. Ensemble comprenant au moins un dispositif (1, 1') de limitation ou de régulation selon l'une des revendications 1 à 8 et un ustensile de cuisine selon l'une des revendications 13 à 14.

## Patentansprüche

1. Vorrichtung (1) zur Begrenzung oder Regelung der Temperatur für ein Kochutensil (10), das dazu bestimmt ist, von einem elektromagnetischen Induktionsgenerator (20) erwärmt zu werden, wobei die Vorrichtung (1) umfasst:
- einen Körper (2) zum Fetshalten einer Spule (3), wobei der Körper (2) zum Halten einen nicht magnetischen und nicht leitfähigen Teil (2a) umfasst, der dazu bestimmt ist, in Bezug auf die Spule (3) gegenüber den elektromagnetischen Induktionsgenerator (20) zu gelangen,
- die Spule (3), die durch den Körper (2) zum Festhalten festgehalten wird, und
- ein Impedanzübergangsmittel (4), das mit der Spule (3) verbunden ist, und aufweist:
- einen ersten Betriebszustand (E1), in dem die Spule (3) in einen ersten elektrischen Zustand (O) mit hoher Impedanz versetzt ist,
- einen
zweiten Betriebszustand (E2), in dem die Spule (3) in einen zweiten elektrischen Zustand (F) mit niedriger Impedanz versetzt ist,
**dadurch gekennzeichnet, dass** die Vorrichtung einen Wärmebetriebsmodus aufweist, in dem das Impedanzübergangsmittel (4) von seinem ersten Betriebszustand (E1) in seinen zweiten Betriebszustand (E2) und umgekehrt, in Abhängigkeit von den zuvor bestimmten Temperaturbedingungen des Impedanzübergangsmittels (4) übergeht.

2. Vorrichtung (1) zur Begrenzung und Regelung nach Anspruch 1, wobei die Vorrichtung zusätzlich zum Wärmebetriebsmodus einen Spannungsbetriebsmodus aufweist, in dem das Impedanzübergangsmittel (4) von seinem ersten Betriebszustand (E1) in seinen zweiten Betriebszustand (E2) und umgekehrt, in Abhängigkeit von einer maßgeblichen Steuerung zum Zustandswechsel des Impedanzüergangsmittels (4) übergeht, die von dem Benutzer ausgelöst wird.

3. Vorrichtung (1) zur Begrenzung der Temperatur nach einem der Ansprüche 1 oder 2, wobei, wenn die Vorrichtung (1) in ihrem Wärmebetriebsmodus ist:
- das Impedanzübergangsmittel (4) in seinem ersten Betriebszustand (E1) ist und die Spule (3) in ihrem ersten elektrischen Zustand (O) mit hoher Impedanz ist, wenn die Temperatur (Temp) des Impedanzübergangsmittels (4) im Laufe einer Erwärmung des Imedanzübergangsmittels (4) niedriger als ein Temperaturübergangswert auf eine zuvor bestimmte niedrige Impedanz (TempF) bleibt, und
- das Impedanzübergangsmittel (4) während eines abgeschlossenen Zeitraums (T2) in seinem zweiten Betriebszustand (E2) ist und die Spule (3) in ihrem zweiten elektrischen Zustand (F) mit niedriger Impedanz ist, wenn im Laufe einer Abkühlung des Impedanzübergangsmittels (4) und nachdem die Temperatur (Temp) des Impedanzübergangsmittels (4) den Übergangstemperaturwert auf eine zuvor bestimmte niedrige Temperatur (TempF) erreicht hat, die Temperatur (Temp) des Impedanzübergangsmittels (4) höher als ein Übergangstemperaturwert auf eine zuvor bestimmte hohe Temperatur (TempO) bleibt, wobei der abgeschlossene Zeitraum (T2) größer als eine zuvor bestimmte Dauer (TMS) eines Sicherheitsmodus des elektromagnetischen Induktionsgenerators (20) ist, wobei der elektromagnetische Induktionsgenerator (20) bei Erkennen eines Nicht-Vorhandenseins eines Kochutensils (10), das zum Erwärmen durch Induktion kompatibel ist, in den Sicherheitsmodus übergeht.

4. Vorrichtung (1) zur Regelung der Temperatur nach einem der Ansprüche 1 oder 2, wobei, wenn die Vorrichtung (1) in ihrem Wärmebetriebsmodus ist:
- das Impedanzübergangsmittel (4) in seinem ersten Betriebszustand (E1) ist und die Spule (3) in ihrem ersten elektrischen Zustand mit hoher Impedanz(O) ist, wenn die Temperatur (Temp) des Impedanzübergangsmittels (4) im Laufe einer Erwärmung des Imedanzübergangsmittels (4) niedriger als ein Temperaturübergangswert auf eine zuvor bestimmte niedrige Impedanz (TempF) bleibt, und
- das Impedanzübergangsmittel (4) während eines abgeschlossenen Zeitraums (T2) in seinem zweiten Betriebszustand (E2) ist und die Spule (3) in ihrem zweiten elektrischen Zustand mit niedriger Impedanz (F) ist, wenn im Laufe einer Abkühlung des Impedanzübergangsmittels (4) und nachdem die Temperatur (Temp) des Impedanzübergangsmittels (4) den Übergangstemperaturwert auf eine zuvor bestimmte niedrige Temperatur (TempF) erreicht hat, die Temperatur (Temp) des Impedanzübergangsmittels (4) höher als ein Übergangstemperaturwert auf eine zuvor bestimmte hohe Temperatur (TempO) bleibt, wobei der abgeschlossene Zeitraum (T2) kleiner als eine zuvor bestimmte Dauer (TMS) eines Sicherheitsmodus des elektromagnetischen Induktionsgenerators (20) ist, wobei der elektromagnetische Induktionsgenerator (20) bei Erkennen eines Nicht-Vorhandenseins eines Kochutensils (10), das zum Erwärmen durch Induktion kompatibel ist, in den Sicherheitsmodus übergeht.

5. Vorrichtung (1) nach einem der Ansprüche 3 oder 4, welche Mittel zum Regeln des Temperaturwerts zum Übergang auf eine zuvor bestimmte niedrige Impedanz (TempF) und/oder des Temperaturwerts zum Übergang auf eine zuvor bestimmte hohe Impedanz (TempO) beinhaltet.

6. Vorrichtung (1) nach einem der Ansprüche 1 bis 5, wobei der Körper (2) zum Festhalten neben dem ersten Teil (2a) einen zweiten Teil (2b) umfasst, der dazu bestimmt ist, entgegengesetzt zum elektromagnetischen Induktionsgenerator (20) in Bezug auf die Spule (3) positioniert zu werden, wobei der zweite Teil (2b) überlagerte Schichten umfasst, die aus Materialien ausgewählt sind, die mit der Induktion kompatibel sind, wie Edelstahl, Stahl, Kupfer oder Nickel, oder aber aus Materialien, die mit der Induktion inkompatibel sind, wie Aluminium, ein Polymer oder ein Elastomer, das der Temperaturbeständigkeit angepasst ist, oder aus einer Verbindung dieser verschiedenen Materialien.

7. Vorrichtung (1) nach einem der Ansprüche 1 bis 6, wobei die Spule (3) eine Verzögerungsvorrichtung beim Aufbau von Strom in der Spule (3), vorzugsweise eine Induktivität umfasst, die mit dem Impedanzübergangsmittel (4) in Reihe geschaltet ist.

8. Vorrichtung (1) nach einem der Ansprüche 1 bis 7, wobei das Impedanzübergangsmittel (4) einen passiven elektrischen Kontakt mit Formgedächtnis, oder einen passiven elektrischen Kontakt mit Formgedächtnis und eine aktive elektronische Komponente, die ausgeführt ist, um den Durchlass von Wechselstrom zu unterbrechen, beispielsweise einen Transistor oder ein Triac umfasst.

9. Bausatz (30), umfassend eine Vielzahl von Vorrichtungen (1) zur Begrenzung der Temperatur nach Anspruch 3, und/oder eine Vielzahl von Vorrichtungen (1) zur Regelung der Temperatur nach Anspruch 4, wobei jede Vorrichtung (1) ein Impedanzübergangsmittel (4) umfasst, in dem der erste Betriebszustand (E1) und der zweite Betriebszustand (E2) gemäß den unterschiedlichen zuvor bestimmten Temperaturwerten zum Übergang auf eine niedrige Impedanz (TempF), und soweit erforderlich gemäß den unterschiedlichen zuvor bestimmten Temperaturwerten zum Übergang auf eine hohe Impedanz (TempO) bestimmt werden.

10. Bausatz (30) nach Anspruch 9, wobei jede Vorrichtung (1) zur Begrenzung und/oder Regelung der Temperatur eine Anpassungsvorrichtung (1') ist, die dazu bestimmt ist, zwischen einer Glaskeramikplatte (22) eines elektromagnetischen Induktionsgenerators (20) und dem Boden (11) eines Kochutensils (10) angeordnet zu werden.

11. Bausatz (30) nach Anspruch 10, wobei der Körper (2) zum Festhalten der Anpassungsvorrichtung (1') einen Abschnitt (8) umfasst, der aus ferromagnetischem Material hergestellt ist, dazu bestimmt, durch Induktion erwärmt zu werden, wobei der Abschnitt (8) ein Edelstahlblech umfasst, und von einer Platte (9) aus Aluminium überragt wird.

12. Bausatz (30) nach Anspruch 10, wobei jede Anpassungsvorrichtung (1') vollkommen aus nicht ferromagnetischem Material hergestellt ist.

13. Kochutensil (10) zum Erwärmen eines Nahrungsmittels oder einer Flüssigkeit aus einem elektromagnetischen Induktionsgenerator (20), insbesondere ein Wasserkocher, eine Teekanne, eine Pfanne, ein Kochtopf oder eine Schale eines Küchengeräts, umfassend einen Boden (11), in den eine Vorrichtung (1) zur Begrenzung der Temperatur nach Anspruch 3, oder eine Vorrichtung (1) zur Regelung der Temperatur nach Anspruch 4 eingefügt ist.

14. Kochutensil (10) nach Anspruch 13, wobei der Boden (11) des Kochutensils (10) eine Aufnahme (12) umfasst, die ausgeführt ist, um jede der Vorrichtungen (1) zur Begrenzung oder Regelung der Temperatur eines Bausatzes (30) nach Anspruch 9 aufzunehmen, wobei die Aufnahme (12) und jede der Vorrichtungen (1) zur Begrenzung oder Regelung der Temperatur eines Bausatzes (30) nach Anspruch 9 ergänzende Befestigungsmittel (7a, 7b) umfasst.

15. Baugruppe, umfassend eine Vorrichtung (1, 1') zur Begrenzung oder Regelung nach einem der Ansprüche 1 bis 8 und ein Kochutensil nach einem der Ansprüche 13 bis 14.

## Claims

1. Device (1) for limiting or regulating the temperature in a cooking utensil (10), intended to be heated by an electromagnetic induction generator (20), said device (1) comprising:
- a holding body (2) of a coil (3), said holding body (2) comprising a nonmagnetic and non-conductive part (2a) intended to face the electromagnetic induction generator (20) with respect to the coil (3),
- the coil (3) held by the holding body (2), and
- an impedance transition means (4) connected to the coil (3) and having:
- a first operating state (E1), wherein the coil (3) is placed in a first electrical state (O) of high impedance,
- a second operating state (E2), wherein the coil (3) is placed in a second electrical state (F) of low impedance,
**characterized in that** said device having a thermal operating mode, wherein the impedance transition means (4) passes from the first operating state (E1) thereof the second operating state (E2) thereof and vice versa according to predetermined temperature conditions of the impedance transition means (4).

2. Device (1) for limiting or regulating the temperature according to claim 1, wherein in addition to the thermal operating mode, the device has a constrained operating mode, wherein the impedance transition means (4) passes from the first operating state (E1) thereof to the second operating state (E2) thereof and vice versa according to a state change preeminent control of the impedance transition means (4) triggered by the user.

3. Device (1) for limiting the temperature according to one of claims 1 or 2, wherein when the device (1) is in the thermal operating mode thereof:
- the impedance transition means (4) is in the first operating state (E1) thereof and the coil (3) in the first electrical state (O) of high impedance thereof when during a heating of the impedance transition means (4), the temperature (Temp) of the impedance transition means (4) remains less than a transition temperature value to a predetermined low impedance (TempF), and
- the impedance transition means (4) is in the second operating state (E2) thereof and the coil (3) in the second electrical state (F) of low impedance thereof during a finite period (T2) when during a cooling of the impedance transition means (4) and after the temperature (Temp) of the impedance transition means (4) has reached said transition temperature value to a predetermined low impedance (TempF), the temperature (Temp) of the impedance transition means (4) remains greater than a transition temperature value to a predetermined high impedance (TempO), said finite period (T2) being greater than a predetermined duration (TMS) of a safety mode of the electromagnetic induction generator (20), the electromagnetic induction generator (20) tipping into said safety mode during a detection of absence of a compatible cooking utensil (10) to be heated by induction.

4. Device (1) for regulating the temperature according to one of claims 1 or 2, wherein when the device (1) is in the thermal operating mode thereof:
- the impedance transition means (4) is in the first operating state (E1) thereof and the coil (3) in the first electrical state (O) of high impedance thereof when during a heating of the impedance transition means (4), the temperature (Temp) of the impedance transition means (4) remains less than a transition temperature value to a predetermined low impedance (TempF), and
- the impedance transition means (4) is in the second operating state (E2) thereof and the coil (3) in the second electrical state (F) of low impedance thereof during a finite period (T2) when during a cooling of the impedance transition means (4) and after the temperature (Temp) of the impedance transition means (4) has reached said transition temperature value to a predetermined low impedance (TempF), the temperature (Temp) of the impedance transition means (4) remains greater than a transition temperature value to a predetermined high impedance (TempO), said finite period (T2) being greater than a predetermined duration (TMS) of a safety mode of the electromagnetic induction generator (20), the electromagnetic induction generator (20) tipping into said safety mode during a detection of absence of a compatible cooking utensil (10) to be heated by induction.

5. Device (1) according to one of claims 3 or 4, comprising means for adjusting the transition temperature value to a predetermined low impedance (TempF) and/or the transition temperature value to a predetermined high impedance (TempO).

6. Device (1) according to one of claims 1 to 5, wherein the holding body (2), in addition to the first part (2a), comprises a second part (2b) intended to be positioned opposite the electromagnetic induction generator (20) with respect to the coil (3), said second part (2b) comprising superposed layers chosen from among materials which are compatible with induction like stainless steel, steel, copper or nickel, or materials which are non-compatible with induction like aluminum, a polymer or an elastomer adapted to holding temperature, or thus an association of these different materials.

7. Device (1) according to one of claims 1 to 6, wherein the coil (3) comprises a timeout device for establishing a current in the coil (3), preferably an inductance connected in series with the impedance transition means (4).

8. Device (1) according to one of claims 1 to 7, wherein the impedance transition means (4) comprises a shape memory passive electrical contact, or a shape memory passive electrical contact and an active electronic component adapted to interrupt the passage of an alternating current, for example a transistor or a triac.

9. Kit (30) comprising a plurality of devices (1) for limiting the temperature according to claim 3, and/or a plurality of devices (1) for regulating the temperature according to claim 4, each device (1) comprising an impedance transition means (4), wherein the first operating state (E1) and the second operating state (E2) are determined according to transition temperature values to a different predetermined low impedance (TempF), and if necessary, according to the transition temperature values to a different predetermined high impedance (TempO).

10. Kit (30) according to claim 9, wherein each device (1) for limiting and/or regulating the temperature is an adapter device (1') intended to be disposed between a glass ceramic plate (22) of an electromagnetic induction generator (20) and the bottom (11) of a cooking utensil (10).

11. Kit (30) according to claim 10, wherein the holding body (2) of each adapter device (1') comprises a portion (8) made of ferromagnetic materials intended to be heated by induction, said portion (8) comprising a stainless steel sheet and is surmounted by an aluminum plate (9).

12. Kit (30) according to claim 10, wherein each adapter device (1') is made fully of non-ferromagnetic materials.

13. Cooking utensil (10) for heating a food or a fluid from an electromagnetic induction generator (20), in particular, a kettle, a tea-maker, a frying pan, a saucepan, or a household appliance bowl, comprising a bottom (11), wherein is inserted a device (1) for limiting the temperature according to claim 3, or a device (1) for regulating the temperature according to claim 4.

14. Cooking utensil (10) according to claim 13, wherein the bottom (11) of the cooking utensil (10) comprises a housing (12) arranged to receive each of the device (1) for limiting or regulating the temperature of a kit (30) according to claim 9, said housing (12) and each of the devices (1) for limiting or regulating the temperature of a kit (30) according to claim 9 comprising complementary fixing means (7a, 7b).

15. Assembly comprising at least one device (1, 1') for limiting or regulating according to one of claims 1 to 8 and a cooking utensil according to one of claims 13 to 14.
